(19) Europäisches Patentamt
European Patent Office
Office européen des brevets

(11) Veröffentlichungsnummer: **0 057 400**
**A2**

(12) # EUROPÄISCHE PATENTANMELDUNG

(21) Anmeldenummer: **82100487.6**

(51) Int. Cl.³: **C 09 C 1/00**, C 09 B 67/22

(22) Anmeldetag: **25.01.82**

(30) Priorität: **04.02.81 DE 3103817**

(43) Veröffentlichungstag der Anmeldung: **11.08.82**
**Patentblatt 82/32**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Endres, Robert, Dr., Hahnenweg 1, D-5000 Koeln 80 (DE)**
Erfinder: **Köhler, Peter, Dr., Oderstrasse 55, D-4150 Krefeld 11 (DE)**

(54) **Brillante grüne Kompositions-Pigmente.**

(57) Die vorliegende Erfindung betrifft brillante grüne Kompositions-Pigmente auf der Basis chromhaltiger Klinopyroxene der Formel

$$Li_xNa_{1-x}Cr(Si_2O_6)$$

wobei x Werte von 0 bis 0,25 und 0,6 bis 1 annehmen kann, mit nur einem Remissionsmaximum, ein Verfahren zu ihrer Herstellung sowie deren Verwendung.

EP 0 057 400 A2

0057400

BAYER AKTIENGESELLSCHAFT 5090 Leverkusen, Bayerwerk

Zentralbereich
Patente, Marken und Lizenzen St-by-c

## Brillante grüne Kompositions-Pigmente

Die vorliegende Erfindung betrifft brillante grüne Kompositions-Pigmente auf der Basis chromhaltiger Klinopyroxene mit nur einem Remissionsmaximum, ein Verfahren zu ihrer Herstellung sowie deren Verwendung.

Alkalichromsilicate gehören zur Reihe der Klinopyroxene der Zusammensetzung $MeCr(Si_2O_6)$ mit Me = Li, Na. Dabei ist die Verbindung $NaCr(Si_2O_6)$ unter dem Namen Kosmochlor, die Verbindung $LiCr(Si_2O_6)$ unter dem Namen γ-Spodumen bekannt. Auch Mischkristalle der allgemeinen Formel $Li_xNa_{1-x}Cr^{III}(Si_2O_6)$, wobei x Werte von 0 bis 0,25 bzw. 0,6 bis 1 einnehmen kann, sind bekannt aus Untersuchungen von F.A. Hummel und Keunho Auh (Mat. Res. Bull. Vol. 5, 301-306 (1970), Pergamon Press. Inc.).

Nur für die Natrium-Verbindung war bisher ein technisches Verfahren zur Herstellung phasenreiner Produkte bekannt (EP-OS 0014 408).

Die Herstellung der reinen Lithium-Phase und der Mischphasen ist Gegenstand einer noch nicht veröffentlichten Patentanmeldung (DOS 3 103 818). Dieses Verfahren ist dadurch gekennzeichnet, daß wasserlösliche oder feindisperse Chromverbindungen zusammen mit Alkali- und $SiO_2$-

haltigen Verbindungen, gegebenenfalls unter Zusatz von Reduktionsmitteln, unter Zusatz von Wasser intensiv gemischt, wobei schon eine Vorreaktion der Mischung auftreten kann, die Mischung nach teilweiser oder vollständiger Entfernung des Wassers bei Temperaturen bis 1250°C geglüht und in an sich bekannter Weise aufgearbeitet werden. Dabei werden als Chromverbindungen insbesondere $CrO_3$, $Cr_2O_3$, Na- oder $NH_4$-dichromat wie auch $Cr(OH)_3$ eingesetzt.

Alle diese Verbindungen zeigen eine leuchtende grüne Farbe, wobei die reine Lithiumverbindung $LiCr(Si_2O_6)$ ein Remissionsmaximum bei $\lambda$ = 530 nm und die reine Natriumverbindung eines bei $\lambda$ = 540 nm aufweist. Die genannten Mischkristalle der allgemeinen Formel $Li_xNa_{1-x}Cr\ (Si_2O_6)$ liegen mit ihren Farbeigenschaften zwischen den beiden Reinverbindungen.

Ein Nachteil der genannten Verbindungen ist ein zweites Remissionsmaximum im Bereich 380-430 nm, das auch typisch für Chromoxidgrünpigmente ist. Diese Farbremission verleiht den genannten Pigmenten den von den Chromoxiden her bekannten häufig unerwünschten violettblauen Farbstich, wenngleich er bei den chromhaltigen Klinopyroxenen nicht so stark ausgeprägt ist.

Der vorliegenden Erfindung lag die Aufgabe zugrunde, Klinopyroxenhaltige Pigmente zur Verfügung zu stellen, die diesen violettblauen Farbstrich nicht aufweisen.

Gegenstand der vorliegenden Erfindung sind brillante grüne Kompositions-Pigmente auf der Basis chromhaltiger Klinopyroxene der Formel

$$Li_xNa_{1-x}Cr\ (Si_2O_6)\quad ,$$

wobei x Werte von 0 bis 0,25 und 0,6 bis 1 annehmen kann, mit nur einem Remissionsmaximum.

Die erfindungsgemäßen brillanten grünen Pigmente stellen eine Kombination dar aus einem oder mehreren Klinopyroxenen mit einem oder mehreren anorganischen und/oder organischen Pigmenten mit jeweils nur einem Remissionsmaximum im grünen bis blaugrünen oder gelb bis gelborangen Bereich.

Dabei sind die gelben bis gelborangen Pigmente vorzugsweise Nickelrutil- und/oder Cadmiumgelb, die grünen bis blaugrünen Pigmente gehören der Reihe der Spinelle an. Die gelb bis gelborangen organischen Pigmente gehören vorzugsweise den Reihen der Monoazopigmente, der Benzidingelb-Pigmente oder der Naphtol-Pigmente an, die grünen bis blaugrünen sind bevorzugt Phthalocyanine.

Pigmente im Sinne der Anmeldung sind anorganische und organische Pigmente und Farbkörper sowie auch Kombinationen, Mischphasen und Mischungen verschiedener Komponenten und Phasen.

Erhalten werden können die brillanten grünen Kompositions-Pigmente dadurch, daß ein oder mehrere chromhaltige Klinopyroxene zusammen mit einem oder mehreren gelben bis gelborangen organischen und/oder anorganischen Farbkörpern oder Pigmenten mit nur einem Remissionsmaximum und gegebenenfalls einem oder mehreren grünen bis blaugrünen organischen und/oder anorganischen Farbkörpern oder Pigmenten mit nur einem Remissionsmaximum so zu einem Pigment aufgearbeitet werden, daß dieses das für die

chromhaltigen Klinopyroxene charakteristische Remissionsmaximum im Wellenlängenbereich 380-430 nm nicht mehr aufzeigt.

Dazu geht man von den entsprechenden Farbkörpern mit einer für sie typischen Teilchengrößenverteilung aus, wie sie als Zwischenstufe in der Pigmentfabrikation anfallen können, und vermahlt sie naß in einer Pigmentmühle zur Pigmentfeinheit auf. Die erhaltenen Mischpigmente können nach dem Trocknen und nach einer Desagglomeration in Lacken und Kunststoffen verwendet werden. Man kann jedoch auch direkt von den einzelnen Pigmenten ausgehen und diese einzeln vermischen, z.B. durch intensive Trockenmischung.

Das erfindungsgemäße Kompositions-Pigment ergibt ein brillantes und zugleich gesättigtes Grünpigment mit nur einem Remissionsmaximum. Vorzugsweise kommen zur Abmischung bzw. Vermahlung als anorganische Gelb- bis Gelborange Pigmente bzw. Farbkörper Nickelrutilgelbpigmente und/oder Cadmiumpigmente bzw. die entsprechenden Farbkörper in Frage, wobei die Rutilpigmente bevorzugt im Lack und die Cadmiumpigmente im Kunststoff eingesetzt werden. Die Farbkörpergemische bzw. Mischfarbkörper werden bevorzugt in Emails eingesetzt.

Die erfindungsgemäßen Kompositions-Pigmente weisen neben ihrer Brillanz und Farbreinheit ein gegenüber den reinen Chromklinopyroxenen weit verbessertes Deckvermögen auf.

Der Bereich des Remissionsmaximums kann weiter nach kürzeren Wellenlängen unter Erhalt der sonst genannten Eigenschaften dadurch verschoben werden, daß außer der Vermahlung bzw. Zumischung eines oder mehrerer gelber bis gelboranger Pigmente mit nur einem Remissionsmaximum zusätzlich ein oder mehrere grüne anorganische Farbkörper bzw. Pigmente mit nur einem Remissionsmaximum vermahlen bzw. zugemischt werden. Dadurch wird es möglich, Grünpigmente mit nur einem Remissionsmaximum innerhalb der Grenzen 485-570 nm zu erhalten.

Für die Emaillierung werden die einzelnen Pigmente zweckmäßig in gröberteiliger Form mit einem mittleren Durchmesser von 3-10 µm eingesetzt, wobei man dann auch von Farbkörpern spricht. In diesem Fall können sie einzeln zur Emailmühle zugesetzt und während der Naßmahlung zusammen mit der Emailfritte und den üblichen Zusätzen direkt vermischt werden. Jedoch steht auch dem Einsatz eines Mischpigmentes oder Pigmentgemisches nichts im Weg. Die erfindungsgemäßen Kompositions-Pigmente können gegebenenfalls auch mit nichtfärbenden Pigmenten oder Farbkörpern versetzt werden.

Die chromhaltigen Klinopyroxene der Formel $Li_xNa_{1-x}Cr(Si_2O_6)$ (x = 0-0,25 und 0,60-1,0) zeichnen sich durch eine außergewöhnlich gute Beständigkeit in Blech- und Gußemails, insbesondere in säure- und heißwasserbeständigen Transparent- und Semiopakfritten aus. Werden emaillierbeständige anorganische Gelb- und Gelborangefarbkörper wie Nickelrutilgelb, Chromrutilgelb und/oder Cadmiumgelb bzw. Cadmiumorange und/oder emaillierbeständige Grünfarbkörper wie Spinellgrün im Mischfarbkörper auf der Basis chromhaltiger Klinopyroxane eingesetzt, so kommt man zu Farbeinstellungen, die in ihrer Farbsättigung und Brillanz bisher in säure- und heißwasserbeständigen Emaillierungen nicht möglich waren. Ein Beispiel hierfür ist Apfelgrün nach RAL 6018 (Abb. 6).

Die Emaillierung mit dem Mischfarbkörper zeichnet sich dadurch aus, daß sie deutlich brennstabiler ist als die jeweiligen Einzelkomponenten (Tabelle 2).

Wie in der Lack- und Kunststoffanwendung mit den Mischpigmenten bzw. Pigmentgemischen wird auch die Emaillierung mit dem Mischfarbkörper deckender als die mit dem reinen Chromklinopyroxen und überraschenderweise auch deckender als mit den weiteren Mischkomponenten, wenn der Anteil des Chromklinopyroxens über 50 Gew.-% beträgt.

Nachfolgend wird die Erfindung beispielhaft erläutert.

Beispiel 1 (siehe auch die Abbildungen 1 und 1a)

In diesem Beispiel soll das optische Verhalten eines Mischpigmentes aus dem brillanten Grünpigment $LiCr(Si_2O_6)$ und einem Nickelrutilgelbpigment der molaren Zusammensetzung $(Ti_{0,88}Sb_{0,05}Ni_{0,07})O_2$ demonstriert werden.

Dazu wurden 84,6 Vol.-% Li Cr $(Si_2O_6)$ und 15,4 Vol.-% (Ti, Ni, Sb)$O_2$ als Farbkörper, d.h. als Produkt mit einem Teilchendurchmesser < 45 µm, so wie es nach einer Kugelmühlenmahlung anfällt, in einer Sandmühle bis zur Pigmentfeinheit gemahlen.

Tabelle 1 Teilchengrößenverteilung des Mischpigmentes

| Durchmesser (µm) | Gew.-% |
|---|---|
| 0 - 2 | 79 |
| 2 - 4 | 18 |
| über 4 | 3 |

Mittlerer Durchmesser: 1,4 µm

Das getrocknete und desagglomerisierte Mischpigment wurde in einem Lack auf Basis eines mittelöligen Alkydharzes (Alkydal(R) F 48 - Handelsprodukt der Bayer AG) mit einem Red-Devil-Schüttelgerät 30 Min. lang dispergiert (15 % PVK). Die Remissionskurve dieses Lackauftriches, in deckender Schicht auf Polyesterfolie aufgezogen, und die

Remissionskurven der Ausgangskomponenten Li Cr ($Si_2O_6$) und (Ti, Ni, Sb) $O_2$ allein, an vergleichbar hergestellten Lackaufstrichen gemessen, sind in Abb. 1 wiedergegeben (Meßgerät PMQ 3 der Fa. Carl Zeiss, Oberkochen). Man erkennt, daß das Remissionsmaximum im sichtbaren Violett bei 380 nm der Ausgangskomponente Li Cr ($Si_2O_6$) in der Mischung völlig unterdrückt wird und daher das reine Grün bei $\lambda_{max.}$ = 535 nm zur Wirkung kommt. Abb. 1a zeigt im Vergleich dazu $Cr_2O_3$-Grün, das wegen des Remissionsmaximums bei $\lambda_{max.}$ = 410 nm kein spektralreines Grün ist. Ein nach dem Stand der Technik vergleichbares Grünpigment (Co, Ni, Zn)$_2$ (Ti, Al) $O_4$ (Inversspinell) ist im Vergleich zum erfindungsgemäßen Mischpigment weniger brillant und farbstark, wie die Remissionskurve in Abb. 1a demonstriert.

Die in den Beispielen aufgeführten Pigmente sind folgende Verkaufsprodukte der Bayer AG.

(Ti, Ni, Sb)$O_2$ = Lichtgelb 8 G
(Co, Ni, Zn)$_2$(Ti, Al)$O_4$ = Lichtgrün 5 G
$Cr_2O_3$ = Chromoxidgrün GN

Dabei wurde das LiCr($Si_2O_6$) wie folgt erhalten:

5043 kg $CrO_3$ (58,5 %ig) wurden in einem Rührbehälter in 170 l Wasser gelöst und vorsichtig 18,74 kg $Li_2CO_3$ als Feststoff portionsweise zugegeben. Danach wurden 69,15 kg Kieselsäure (Silcasil S$^{(R)}$, 87 % $SiO_2$) und

2,60 kg Stärke innerhalt von 6 h untergerüht sowie 15 h bei RT homogenisiert.

Die Naßmischung (~45 % Feststoffgehalt) wurde in einer beheizbaren Doppelschnecke zu einem Bruchgranulat mit ca. 15 % Restfeuchte getrocknet, in einer Mühle zerkleinert und in einem indirekt beheizbaren Ofen ohne Produktbewegung 4 h bei 1100 + 15°C geglüht (ca. 8 h Aufheizphase).

Das Calcinat wurde 1 h in Wasser suspendiert (~30 % Feststoffanteil), filtriert und gewaschen (ca. 0,03 % $CrO_4^{2-}$ im Filtrat, bezogen auf den Feststoff). Die Naßmahlung erfolgte in einer Sandmühle (30 min.); die Trocknung erfolgte in einem Sprühtrockner.

Es wurden 95,5 kg eines leuchtend smaragdgrünen phasenreinen Produktes erhalten, das eine BET-Oberfläche von 3,2 m²/g hatte.

Beispiel 2 (Abb. 2)

Es wurden 92 Vol.-% Na Cr $(Si_2O_6)$ und 8 Vol.-% (Ti, Ni, Sb) $O_2$ zum Mischpigment analog Beispiel 1 verarbeitet.

Dieses Beispiel zeigt, daß auch die Remissionskurve der Na-Verbindung Na Cr $(Si_2O_6)$, abgemischt mit Nickelrutilgelb, kein Remissionsmaximum im violetten Bereich zeigt wie die Ausgangsverbindung ($\lambda_{max}$ = 405 nm).

Statt des Mischpigmentes der Beispiele 1 und 2 erzielt man den erfindungsgemäßen Effekt (Abbildungen 1 und 2) auch dann, wenn man die Einzelkomponenten als Pigment in der Größenordnung der angegebenen Teilchengrößenverteilung nach Tabelle 1 trocken mischt (z.B. Pflugscharmischer) und in den angegebenen Verhältnissen im Lack einsetzt.

In den folgenden Beispielen 3-5 (Abbildungen 3-5) wird gezeigt, daß der erfindungsgemäße Effekt auch für Emaillierungen gilt.

Dazu wurden in eine Kugelmühle zur Emailfritte und den nach dem Stand der Technik üblichen Schlickerkomponenten die Farbkörper gegeben. Eine typische Farbkörperteilchengrößenverteilung demonstriert die folgende Tabelle:

Tabelle 2 Teilchengrößenverteilung des Farbkörpers Na Cr $(Si_2O_6)$

| Durchmesser (µm) | Gew.-% |
|---|---|
| 0 - 2 | 27 |
| 2 - 4 | 17 |
| 4 - 6 | 19 |
| 6 - 8 | 7 |
| 8 - 10 | 15 |
| 10 - 12 | 12 |
| 12 - 14 | 1 |
| über 14 | 2 |

Mittlerer Durchmesser: 5,2 µm

Es wurde ein handelsübliches säurebeständiges Transparentemail (Säureklasse AA nach DIN 51.150) ausgewählt. Die Emailfarbkörper Na Cr $(Si_2O_6)$ und Li Cr $(Si_2O_6)$ wurden mit den Gelbfarbkörpern (Ri, Ni,

Sb) $O_2$ und (Cd, Zn) S wie angegeben, als Einzelkomponenten mit 4 Gew.-%, bezogen auf Emailfritte, eingesetzt. Die Emaillierung wurde auf grundemaillierten Blechen bei 830°C und 3 Min. Einbrennzeit nach dem üblichen Stand der Technik durchgeführt.

Beispiel 6 (Abbildung 6)

Es wurde mit Hilfe des erfindungsgemäßen Mischfarbkörpers ein brillantes Apfelgrün nach RAL 6018 in einem säurebeständigen Email (Säureklasse AA nach DIN 51.150) eingestellt. Es wurden 4,6 Gew.-% Farbkörpergemisch in die Emaillierung eingesetzt, das sich anteilmäßig zusammensetzt aus

58 Gew.-% Na Cr $(Si_2O_6)$,
32 Gew.-% (Cd, Zn) S und
10 Gew.-% Co $(Cr, Al)_2 O_4$.

Der Emailschlicker wurde nach folgendem Mühlenversatz in Wasser hergestellt:

| | |
|---|---|
| Transparentemail TR 2522 | 45,2 Gew.-% |
| Semiopakenaise WF 2507 | 45,2 Gew.-% |
| NaCr $(Si_2O_6)$ | 2,7 Gew.-% |
| Cadmiumgelb FA 3605 | 1,5 Gew.-% |
| Spinellblau FA 6290 | 0,4 Gew.-% |
| Blauton | 3,6 Gew.-% |
| $Na_2SiF_6$ | 0,5 Gew.-% |
| ZnO | 0,9 Gew.-% |

Die im Mühlenversatz angegebenen Produkte sind handelsübliche Produkte der Bayer AG.

Beispiele 7 und 8 (Tabelle 2 und 3)

Die Farbkörper wurden in den angegebenen Mischungsverhältnissen in das säurefeste Transparentemail TR 2522 der Bayer AG, (Säureklasse AA nach DIN 51.150) eingesetzt. Es wurden zwei Emailplatten hergestellt: Eine wurde 3 Minuten bei 830°C eingebrannt, eine zweite Platte wurde zweimal 3 Minuten bei 830°C emailliert.

Beide Platten wurden farbmetrisch nach den Hunter-Lab-Koordinaten ausgemessen und der Farbabstand E nach DIN 6174 (Farbmetrische Bestimmung von Farbabständen von Kupferfarben nach der CIELAB-Formel) bestimmt:

$$\Delta E^*_{ab} = \sqrt{(\Delta L^*)^2 + (\Delta a^*)^2 + (\Delta b^*)^2}$$

Tabelle 2 Brennbeständigkeit des Mischfarbkörpers Na Cr $(Si_2O_6)$ und $(Ti, Ni, Sb)O_2$ sowie der Einzelkomponenten im Transparentemail

| Nr. | 1 | 2 | 3 | 4 |
|---|---|---|---|---|
| Gew.-% Na Cr $(Si_2O_6)$: | 4 | 2 | 2 | 0 |
| Gew.-% (Ti, Ni, Sb) $O_2$: | 0 | 2 | 4 | 4 |
| Brennbeständigkeit $\Delta E^*_{ab}$: | 3,6 | 1,0 | 0,8 | 1,8 |

<u>Tabelle 3</u> Brennbeständigkeit des Mischfarbkörpers Li Cr ($Si_2O_6$) und (Cd, Zn) S sowie der Einzelkomponenten im Transparentemail.

| Nr. | 1 | 2 | 3 | 4 |
|---|---|---|---|---|
| Gew.-% Li Cr ($Si_2O_6$): | 4 | 2 | 2 | 0 |
| Gew.-% (Cd, Zn) S: | 0 | 2 | 4 | 4 |
| Brennbeständigkeit $\Delta E^*_{ab}$: | 3,5 | 0,4 | 0,4 | 1,0 |

<u>Beispiele 9 und 10</u> (Tabellen 4 und 5)

Es wurde das Deckvermögen der Farbkörper im angegebenen Gewichtsverhältnis bezogen auf 100 % Emailfritte (Säurefestes Transparentemail) nach H. Kyri bestimmt: Handbuch für Bayer-Email, Bayer Rickmann GmbH, Köln (1973) Band 1, Seite 155.

Das Deckvermögen gibt danach zahlenmäßig an, wieviel $dm^2$ pro g Farb-Email emailliert werden können, um 95 % Endhelligkeit zu erreichen. Die Bestimmung der Remission erfolgte bei $\lambda$ = 535 nm für Li Cr ($Si_2O_6$) und 540 nm für Na Cr ($Si_2O_6$) mittels des Spektralphotometers PMQ der Fa. Carl Zeis, Oberkochen.

<u>Tabelle 4</u> Deckvermögen des Mischfarbkörpers Na Cr ($Si_2O_6$) und (Ti, Ni, Sb) $O_2$ sowie der Einzelkomponenten im Transparentemail

| Nr. | 1 | 2 | 3 | 4 |
|---|---|---|---|---|
| Gew.-% Na Cr ($Si_2O_6$) | 4 | 2 | 2 | 0 |
| Gew.-% (Ti, Ni, Sb) $O_2$: | 0 | 3 | 4 | 4 |
| Deckvermögen ($dm^2$/g) | 0,045 | 0,066 | 0,084 | 0,057 |

Tabelle 5 Deckvermögen des Mischfarbkröpers Na Cr ($Si_2O_6$) und (Cd, Zn) S sowie der Einzelkomponenten im Transparentemail

| Nr. | 1 | 2 | 3 |
|---|---|---|---|
| Gew.-% Na Cr ($Si_2O_6$) | 4 | 4 | 0 |
| Gew.-% (Cd, Zn) S: | 0 | 1 | 4 |
| Deckvermögen ($dm^2/g$) | 0,045 | 0,078 | 0,068 |

0057400

Patentansprüche

1. Brillante grüne Kompositions-Pigmente auf der Basis chromhaltiger Klinopyroxene der Formel

$$Li_xNa_{1-x}Cr\,Si_2O_6 \quad ,$$

wobei x Werte von 0 bis 0,25 und 0,6 bis 1 annehmen kann, mit nur einem Remissionsmaximum.

2. Brillante grüne Kompositions-Pigmente gemäß Anspruch 1, bestehend aus einem oder mehreren Klinopyroxenen und einem oder mehreren gelben bis gelborangen organischen und/oder anorganischen Farbkörpern oder Pigmenten mit nur einem Remissionsmaximum und gegebenenfalls einem oder mehreren grünen bis blaugrünen organischen und/oder anorganischen Farbkörper oder Pigmenten mit nur einem Remissionsmaximum.

3. Brillante grüne Kompositions-Pigmente gemäß einem der Ansprüche 1 oder 2, dadurch gekennzeichnet, daß die gelben bis gelborangen Farbkörper oder Pigmente Nickelrutil-, Cadmiumgelb-, Monoazo-, Benzidin- und/oder Naphtol-Pigmente sind.

4. Brillante grüne Kompositions-Pigmente gemäß einem der Ansprüche 1 bis 3, dadurch gekennzeichnet,

daß die grünen bis blaugrünen Farbkörper oder Pigmente der Reihe der Spinelle und/oder Phthalocyanine angehören.

5. Brillante grüne Kompositions-Pigmente gemäß einem der Ansprüche 1 bis 4, dadurch erhältlich, daß ein oder mehrere chromhaltige Klinopyroxene so mit einem oder mehreren anorganischen und/oder organischen Pigmenten oder Farbkörpern versetzt werden, daß das für Klinopyroxene charakteristische Remissionsmaximum im Wellenlängenbereich 380 - 430 nm eliminiert wird.

6. Verfahren zur Herstellung der brillanten grünen Kompositions-Pigmente gemäß einem der Ansprüche 1 bis 6, dadurch gekennzeichnet, daß ein oder mehrere chromhaltige Klinopyroxene zusammen mit einem oder mehreren gelben bis gelborangen organischen und/oder anorganischen Farbkörpern oder Pigmenten mit nur einem Remissionsmaximum und gegebenenfalls einem oder mehreren grünen bis blaugrünen organischen und/oder anorganischen Farbkörpern oder Pigmenten mit nur einem Remissionsmaximum so zu einem Mischpigment oder -farbkörper aufgearbeitet werden, daß dieses bzw. dieser das für die chromhaltigen Klinopyroxene charakteristische Remissionsmaximum im Wellenlängen bereich 380-430 nm nicht mehr aufzeigt.

7. Verwendung der brillanten grünen Kompositions-Pigmente gemäß einem der Ansprüche 1 bis 6 zur Anfärbung von Kunststoffen und Lacken.

8. Verwendung der brillanten grünen Kompositions-Pigmente gemäß einem der Ansprüche 1 bis 6 zur Anfärbung von Emails.

9. Verwendung der brillanten grünen Kcmpositions-Pigmente gemäß einem der Ansprüche 1 bis 6 zur Anfärbung von heißwasserbeständigen Transparent- und Semiopakemails für Stahlblech- und Guß-emaillierungen.

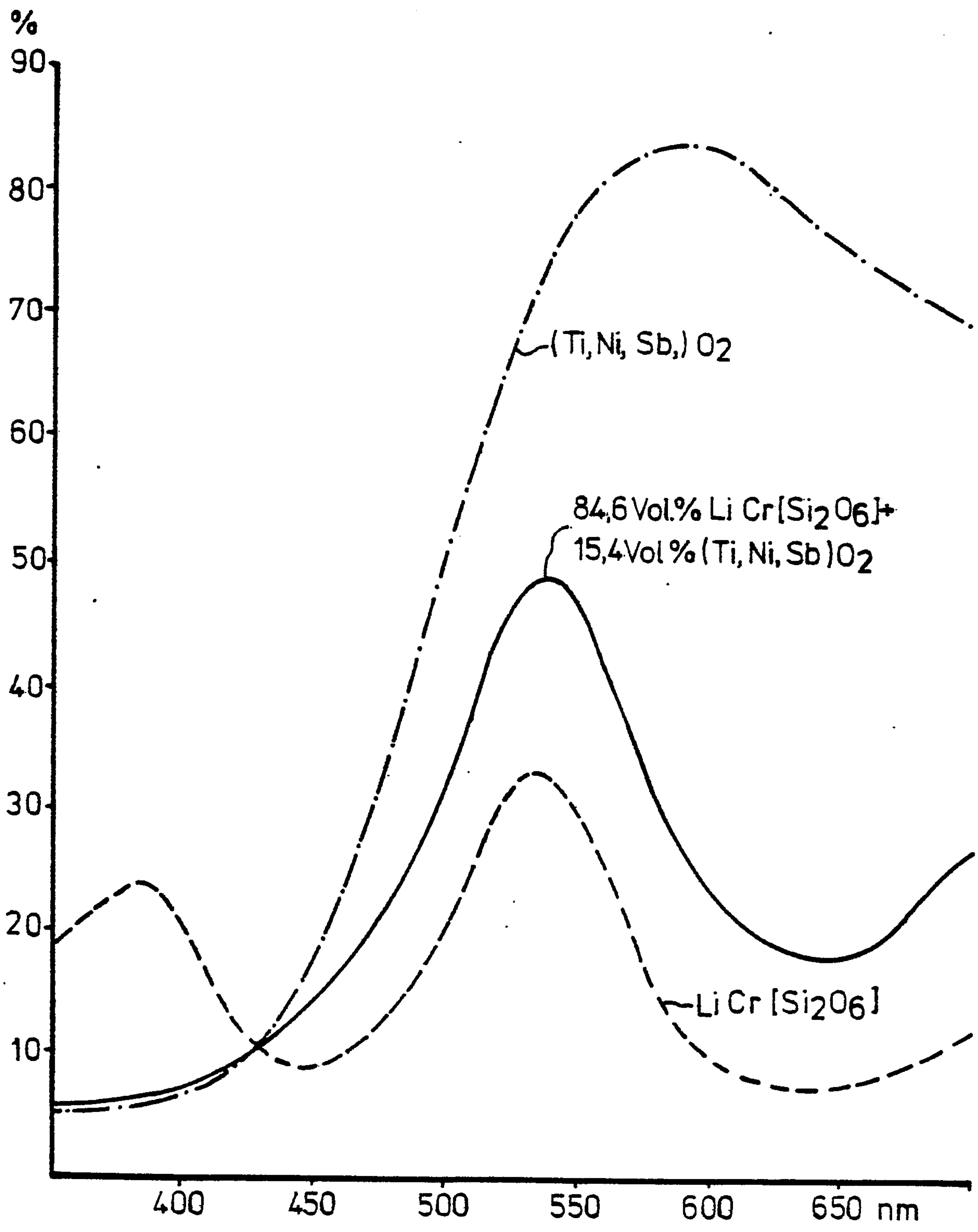
%
90
80
70
60
50
40
30
20
10
400
450
500
550
600
650 nm
(Ti, Ni, Sb,) O2
84,6 Vol.% Li Cr [Si2 O6]+
15,4 Vol % (Ti, Ni, Sb) O2
Li Cr [Si2 O6]

FIG. 1

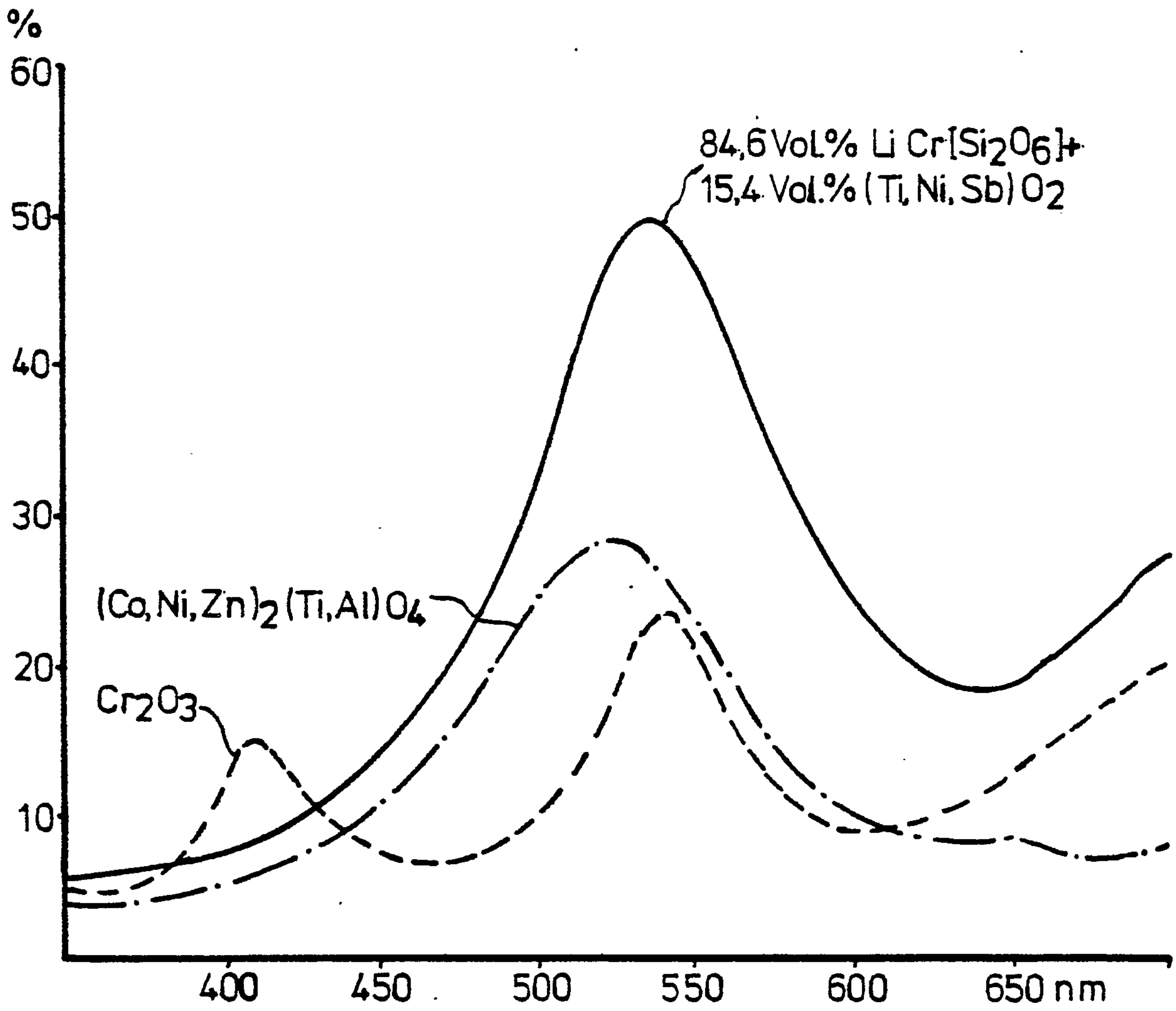
%
60
50
40
30
20
10
400
450
500
550
600
650 nm
84,6 Vol.% Li Cr[$Si_2O_6$]+
15,4 Vol.% (Ti, Ni, Sb) $O_2$
(Co, Ni, Zn)$_2$ (Ti, Al) $O_4$
$Cr_2O_3$

FIG. 1a

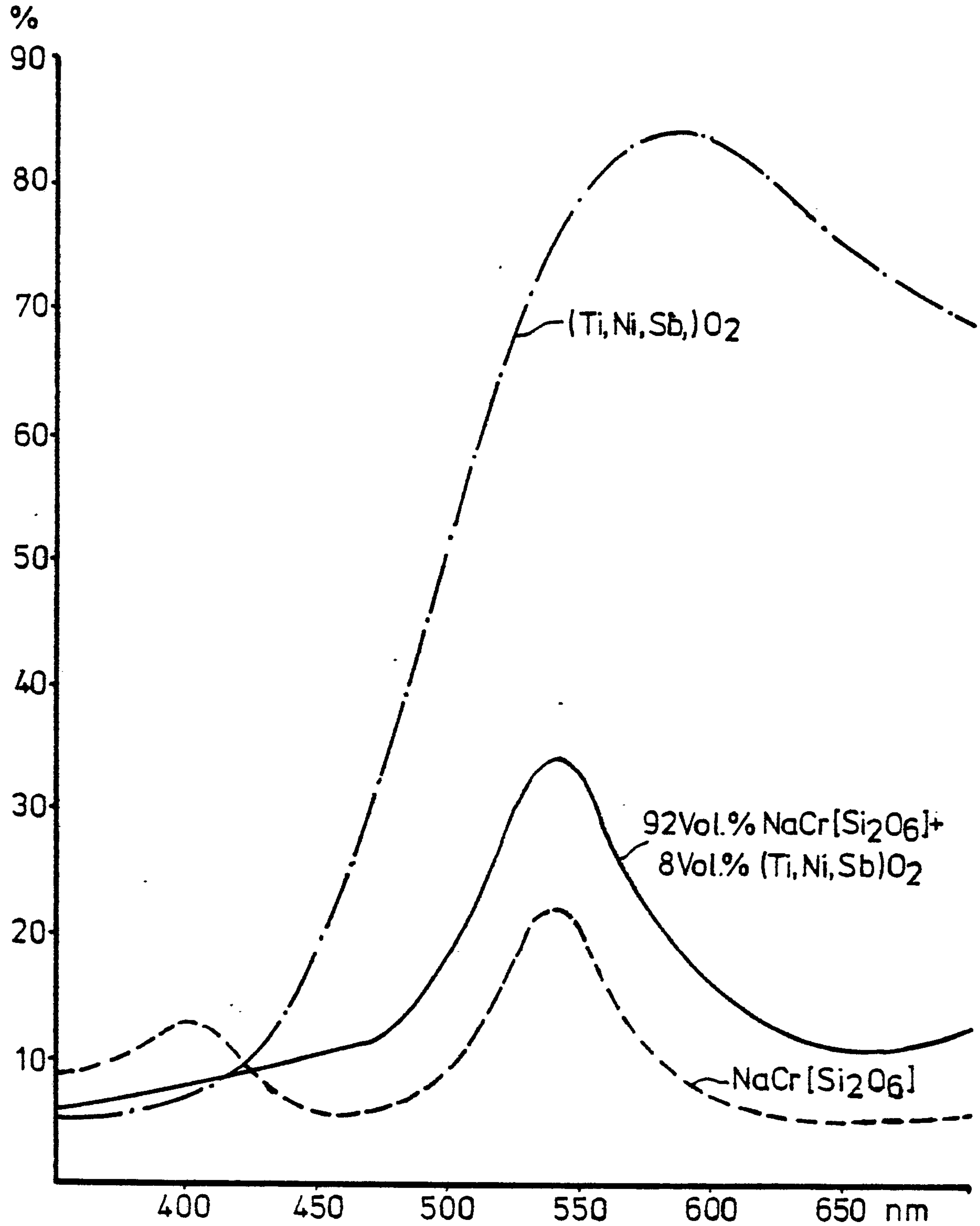
%
90
80
70
60
50
40
30
20
10
400
450
500
550
600
650 nm
(Ti,Ni,Sb,)O2
92Vol.% NaCr[Si2O6]+
8Vol.% (Ti,Ni,Sb)O2
NaCr[Si2O6]

FIG. 2

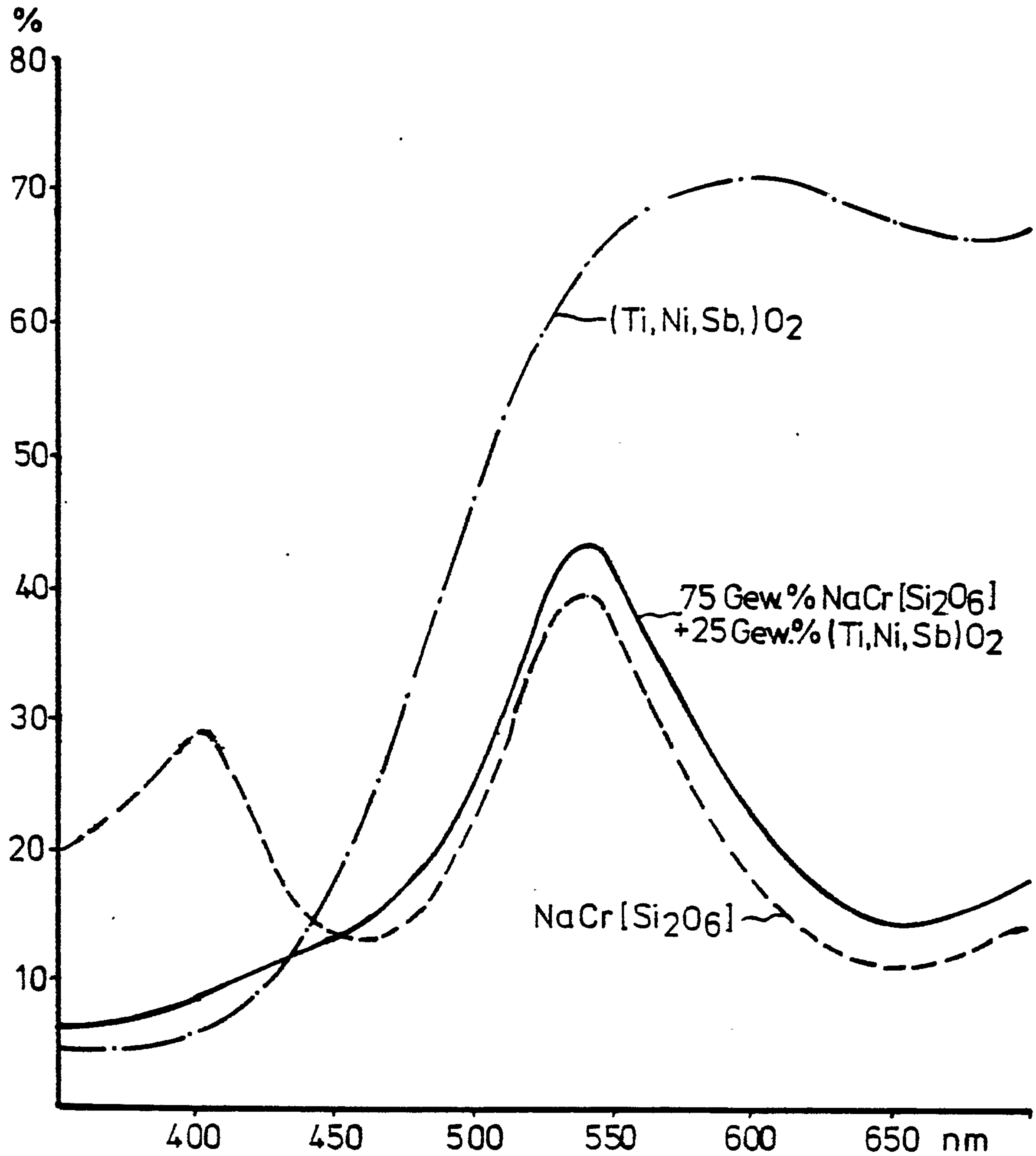
%
80
70
60
50
40
30
20
10
400
450
500
550
600
650 nm
(Ti, Ni, Sb,) O2
75 Gew.% NaCr [Si2O6]
+25 Gew.% (Ti, Ni, Sb) O2
NaCr [Si2O6]

FIG. 3

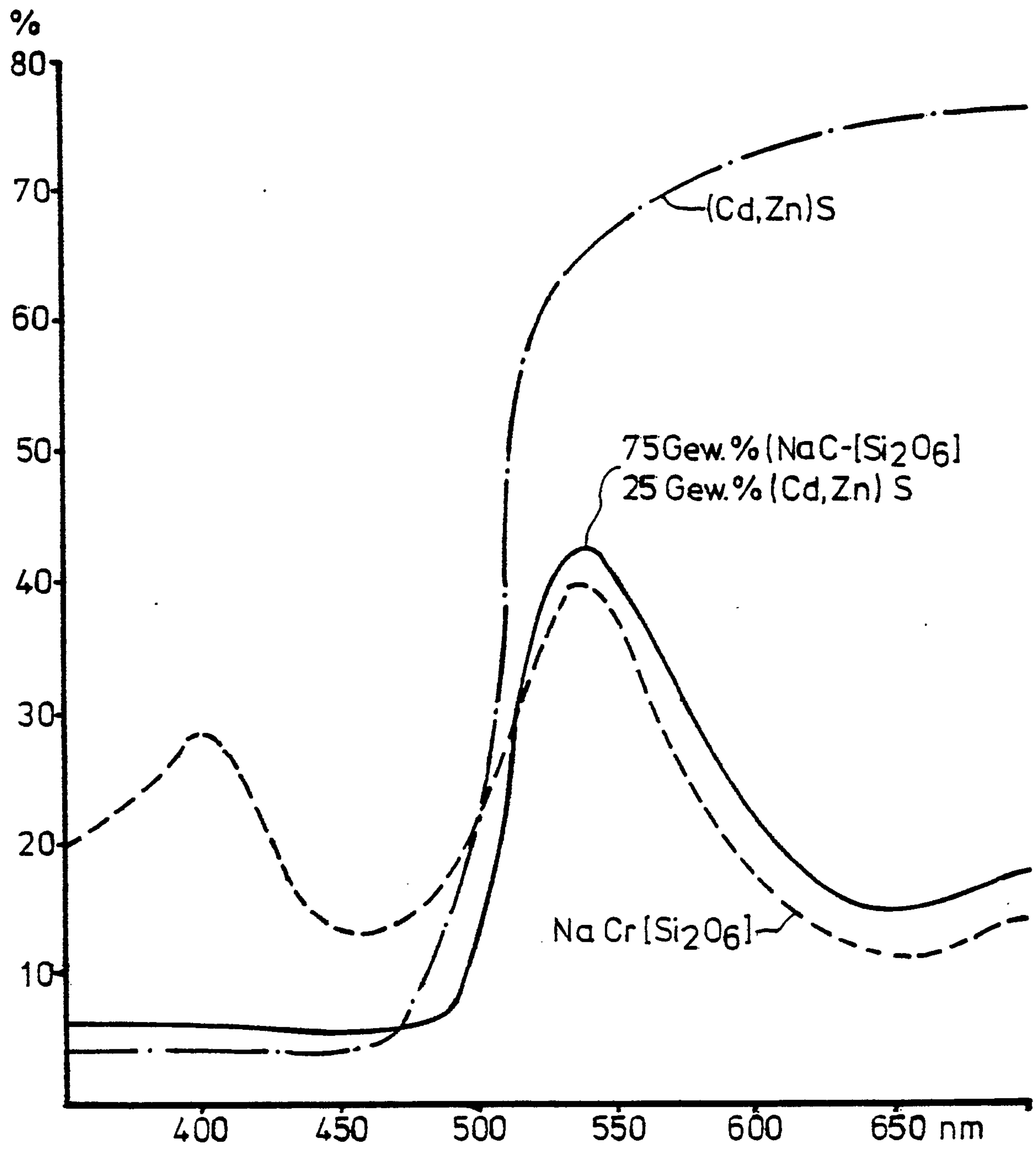
%
80
70
60
50
40
30
20
10
400
450
500
550
600
650 nm
(Cd,Zn)S
75 Gew.% (NaC-[Si2O6]
25 Gew.% (Cd,Zn) S
Na Cr [Si2O6]

FIG. 4

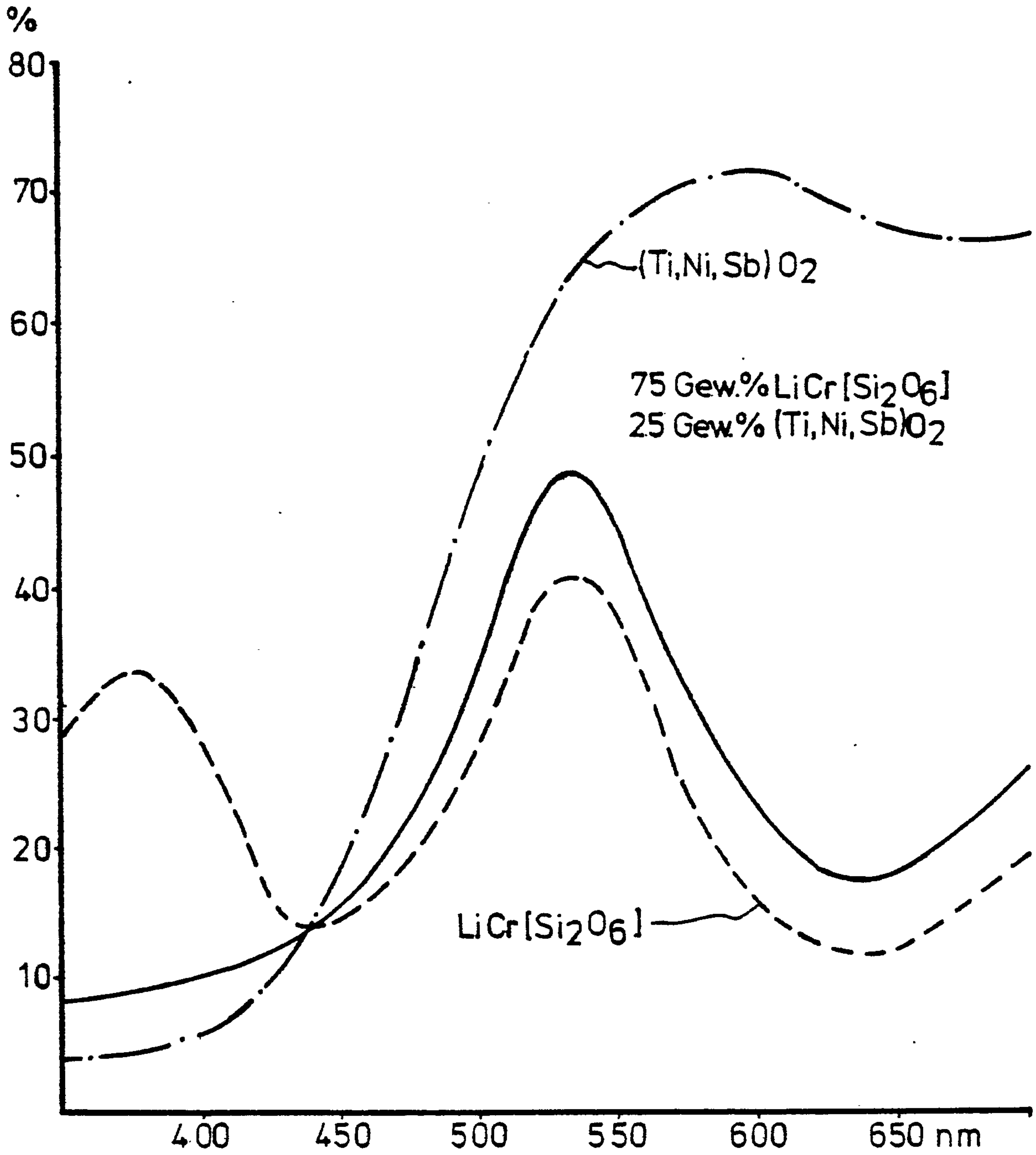
%
80
70
60
50
40
30
20
10
400
450
500
550
600
650 nm
(Ti,Ni,Sb)O2
75 Gew.% LiCr[Si2O6]
25 Gew.% (Ti,Ni,Sb)O2
LiCr[Si2O6]

FIG. 5

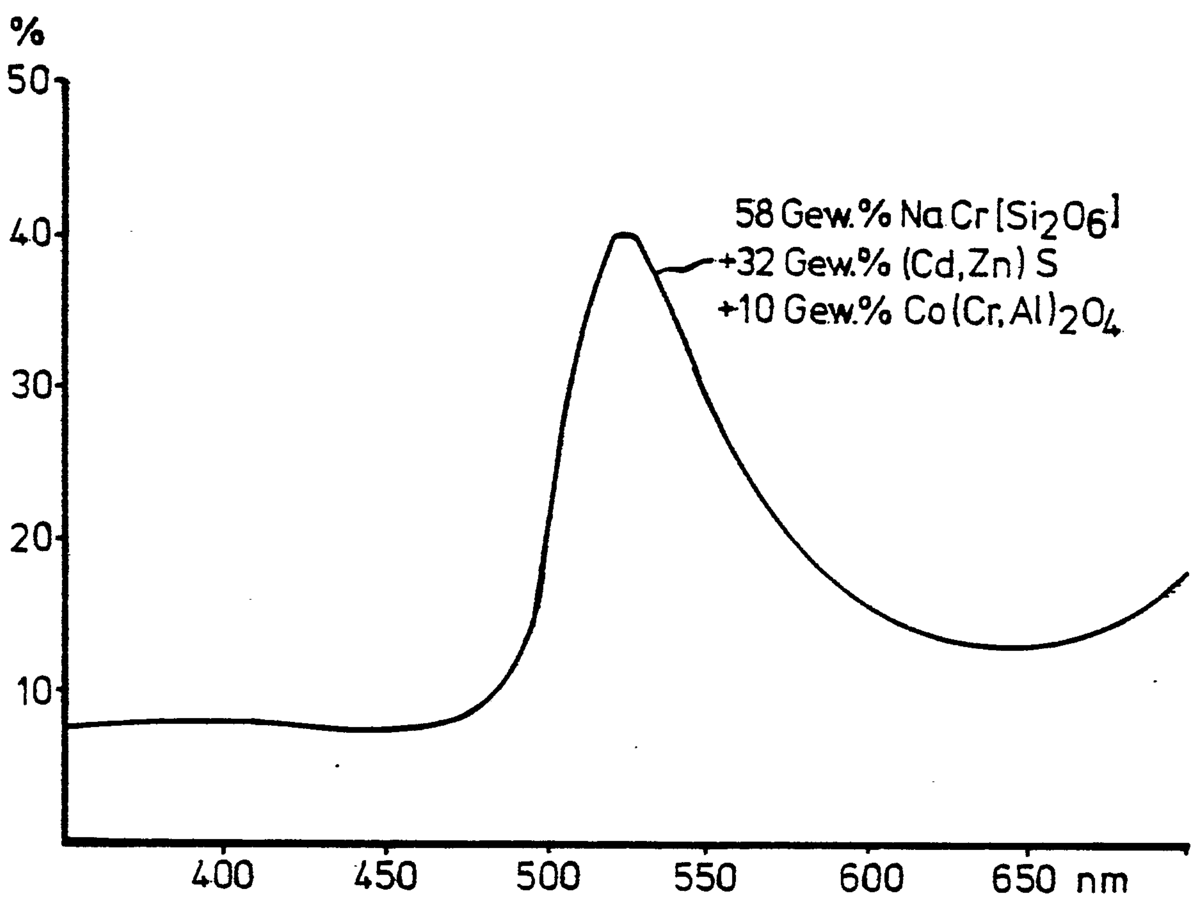
%
50
40
30
20
10
58 Gew.% Na Cr [Si2O6]
+32 Gew.% (Cd,Zn) S
+10 Gew.% Co(Cr,Al)2O4
400
450
500
550
600
650 nm

FIG. 6